# EUROPÄISCHE PATENTSCHRIFT

(11) **EP 3 580 074 B1**
(45) Veröffentlichungstag und Bekanntmachung des Hinweises auf die Patenterteilung: **29.03.2023**
(21) Anmeldenummer: 18706438.1
(22) Anmeldetag: 08.02.2018
(51) Int. Cl.: B60D 5/00, B61D 17/22

(54) **MEHRSCHICHTIGES FLÄCHENGEBILDE AUFWEISEND ZUMINDEST EIN TRÄGERGEWEBE, ÜBERGANGSELEMENT AUFWEISEND EIN DERARTIGES MEHRSCHICHTIGES FLÄCHENGEBILDE, SOWIE FAHRZEUG, FLUGGASTBRÜCKE ODER -TREPPE MIT EINEM DERARTIGEN ÜBERGANGSELEMENT**
MULTI-LAYERED SHEET MATERIAL HAVING AT LEAST ONE WOVEN REINFORCEMENT FABRIC, TRANSITION ELEMENT HAVING SUCH A MULTI-LAYERED SHEET MATERIAL, AND VEHICLE, PASSENGER BOARDING BRIDGE, OR PASSENGER STAIRS HAVING SUCH A TRANSITION ELEMENT
STRUCTURE PLANE MULTICOUCHE POSSÉDANT AU MOINS UN TISSU PORTEUR, ÉLÉMENT DE TRANSITION POSSÉDANT UNE TELLE STRUCTURE PLANE MULTICOUCHE, AINSI QUE VÉHICULE, PASSERELLE OU ESCALIER POUR PASSAGERS D'AVION MUNI D'UN TEL ÉLÉMENT DE TRANSITION

(30) Priorität: 09.02.2017 DE 102017102626
(43) Veröffentlichungstag der Anmeldung: 18.12.2019
(73) Patentinhaber: Hübner GmbH & Co. KG, 34123 Kassel (DE)
(72) Erfinder: BUSCH, Thomas, 34359 Reinhardshagen (DE); WIEGREFE, Andreas, 36039 Fulda (DE); HÜBNER, Reinhard, 34130 Kassel (DE)
(74) Vertreter: Dr. Solf & Zapf Patent- und Rechtsanwalts PartG mbB
(86) Internationale Anmeldenummer: PCT/EP2018/053229
(87) Internationale Veröffentlichungsnummer: WO 2018/146227

(56) Entgegenhaltungen:
- EP-A1- 0 544 203
- EP-A2- 0 226 971
- WO-A1-2017/198683
- DE-A1- 1 961 728
- DE-A1- 3 835 045
- DE-A1- 4 419 410
- DE-A1-102004 043 193

## Beschreibung

Die vorliegende Erfindung betrifft ein mehrschichtiges Flächengebilde, welches einen Festigkeitsträger aufweist, der zumindest einseitig, vorzugsweise beidseitig, mit einer Polymerschicht beschichtet ist, wobei der Festigkeitsträger zumindest ein textiles Flächengebilde bzw. ein flächiges Trägertextil, bevorzugt ein Trägergewebe, aufweist.

Die Erfindung betrifft ferner ein Übergangselement, insbesondere einen Übergangsbalg, für Bauteile, Fahrzeuge, Gebäudeverbindungen oder für Fluggastbrücken oder -treppen, aufweisend zumindest ein derartiges mehrschichtiges Flächengebilde, wobei das Übergangselement zum Schutz eines Übergangs von zwei relativ zueinander beweglich miteinander verbundenen Fahrzeugteilen oder Bauteilen oder von zwei Gebäudeteilen, insbesondere von zwei gelenkig miteinander verbundenen Fahrzeugteilen oder Bauteilen, vor äußeren Einflüssen dient.

Außerdem betrifft die Erfindung ein Fahrzeug, eine Gebäudeverbindung sowie eine Fluggastbrücke oder -treppe mit einem derartigen Übergangselement, insbesondere einem Übergangsbalg.

Es ist bekannt, als Übergangsschutz für den Übergang zwischen den einzelnen, gelenkig miteinander verbundenen Fahrzeugteilen eines Fahrzeuges, insbesondere eines Gelenkbusses oder eines Schienenfahrzeugs, oder als Übergangsschutz für Fluggastbrücken Übergangsbälge in Form von Falten- oder Wellenbälgen einzusetzen. Die Falten bzw. Wellen sorgen für die notwendige Dehnbarkeit in Fahrtrichtung, so dass Relativbewegungen der Fahrzeugteile bzw. der Fluggastbrückenelemente möglich sind. Die Falten- oder Wellenbälge weisen eine Balgwandung aus einem mehrschichtigen Flächengebilde mit mittigem Festigkeitsträger auf, wobei die Balgwandung zur Ausbildung der Wellen oder Falten in regelmäßigen Abständen in Balgrahmen eingespannt ist. Dazu sind die Balgrahmen im Querschnitt U-förmig ausgebildet, wobei die Balgwandung in die Öffnung der Balgrahmen eingeklemmt ist. Beispielsweise geht ein derartiger Faltenbalg aus der EP 0 698 514 B1 hervor. Das Einklemmen der Balgwandung ist aufwendig.

Die DE 10 2004 043 193 A1 offenbart ein ein- oder mehrlagiges, vorzugsweise zweilagiges Textil, wobei das Textil zu beiden Seiten mit einer flammfesten, elastischen Beschichtung versehen ist, wobei die mindestens eine Textillage eine Gitterstruktur aus hochtemperaturfestem und/oder flammfestem Material aufweist. Zudem ist die Gitterstruktur derart ausgebildet, dass sich unter Wärmeeinwirkung zwischen der Beschichtung und dem Textil Kanäle, vorzugsweise in zwei Raumrichtungen in Richtung auf die Zone höchster Wärme des ein- oder mehrlagigen Textils bilden, um die bei der Verbrennung des Textils entstehenden Gase in Richtung der Zone höchster Wärme abzuführen, wobei bei einem Gewebe die Gitterstruktur durch jeweils zueinander beabstandete gesonderte Kett- und/oder Schussfäden aus hochtemperaturfesten oder flammfesten Fäden hergestellt ist, die mit der textilen Lage in Verbindung steht.

Die DE 44 19 410 A1 offenbart eine faltbare und/oder rollbare Bahn mit parallel zueinander in einer ihrer Erstreckungsrichtung verlaufenden, schlauchartigen Taschen für Versteifungselemente. Die Bahn weist ein Gewebe auf, das im Bereich jeder Tasche zwei bindungslos übereinanderliegende Gewebelagen bildet und dessen Außenseiten mit einer Beschichtung aus einem elastisch deformierbaren Kunststoff versehen sind.

Die DE 38 35 045 A1 offenbart ein textiles Flächengebilde mit auf einem Grundmaterial ein- oder beidseitig vorhandenen Abstandhaltern, wobei die Abstandhalter von auf dem Grundmaterial fixierten grobtitrigen Fäden gebildet werden. Der Durchmesser der grobtitrigen Fäden bestimmt den Abstand zwischen dem Grundmaterial und anderen Flächen.

Aufgabe der vorliegenden Erfindung ist es, ein mehrschichtiges Flächengebilde für ein gattungsgemäßes Übergangselement bereit zu stellen, das einen Festigkeitsträger aufweist, der zumindest einseitig, vorzugsweise beidseitig, eine Polymerbeschichtung aufweist, wobei das Flächengebilde einfach und kostengünstig herstellbar ist und optimal an die mechanischen Anforderungen, insbesondere bezüglich der mechanischen Eigenschaften, insbesondere der Festigkeit, anpassbar ist.

Weitere Aufgabe der vorliegenden Erfindung ist die Bereitstellung eines Übergangselements, insbesondere eines Übergangsbalgs, zum Schutz eines Übergangs von zwei relativ zueinander beweglich miteinander verbundenen Fahrzeugteilen oder Bauteilen, insbesondere von zwei gelenkig miteinander verbundenen Fahrzeugteilen oder Bauteilen, vor äußeren Einflüssen, wobei das Übergangselement mindestens zwei zueinander beabstandete Spannelemente aufweist, zwischen die ein Flächengebilde als Übergangselementwandung eingespannt ist.

Weitere Aufgabe ist die Bereitstellung eines Fahrzeugs oder einer Fluggastbrücke- oder treppe mit einem derartigen Übergangselement.

Die Aufgaben werden durch ein mehrschichtiges Flächengebilde mit den Merkmalen von Anspruch 1, ein Übergangselement mit den Merkmalen von Anspruch 12, ein Fahrzeug mit den Merkmalen von Anspruch 13, eine Fluggastbrücke oder -treppe mit den Merkmalen von Anspruch 14 und eine Gebäudeverbindung mit den Merkmalen von Anspruch 15 gelöst. Vorteilhafte Weiterbildungen der Erfindung sind in den sich jeweils anschließenden Unteransprüchen gekennzeichnet.

Im Folgenden wird die Erfindung anhand einer Zeichnung beispielhaft näher erläutert. Es zeigen:
- Figur 1:: Stark vereinfacht und sehr schematisch eine querschnittsartige Ansicht eines erfindungsgemäßen Flächengebildes mit einem Trägergewebe mit Verstärkungskettfäden
- Figur 2:: Schematisch eine Draufsicht auf ein Trägergewebe des erfindungsgemäßen Flächengebildes gemäß einer ersten Ausführungsform mit Verstärkungskettfäden und Verstärkungsschussfäden
- Figur 3:: Schematisch eine Draufsicht auf ein Trägergewebe des erfindungsgemäßen Flächengebildes gemäß einer weiteren Ausführungsform nur mit Verstärkungsschussfäden
- Figur 4:: Schematisch eine Draufsicht auf ein Trägergewebe des erfindungsgemäßen Flächengebildes gemäß einer weiteren Ausführungsform nur mit Verstärkungsschussfäden
- Figur 5:: Schematisch eine perspektivische Ansicht eines Wellenbalges
- Figur 6:: Schematisch eine Seitenansicht eines Übergangs von zwei Fahrzeugteilen mit einem Übergangsbalg in Form eines Faltenbalges

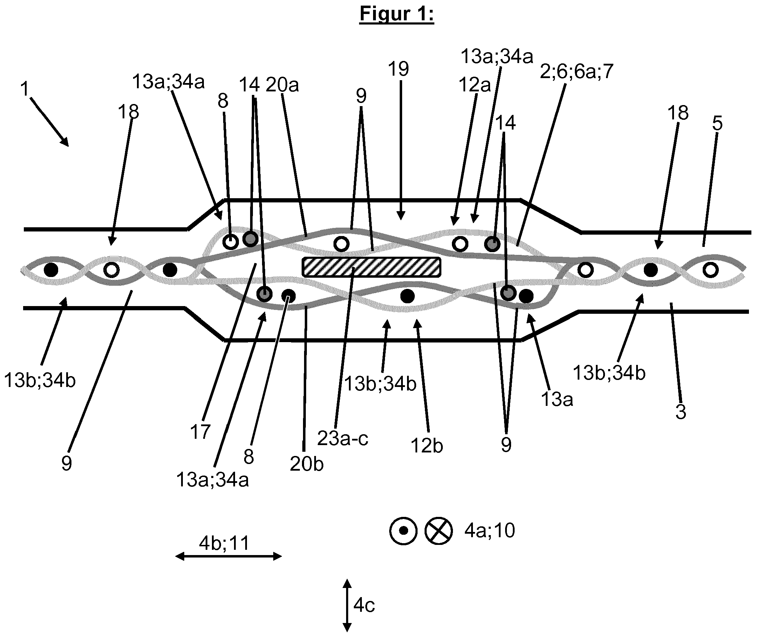

Das erfindungsgemäße mehrschichtige, flexible Flächengebilde 1 (Fig. 1) weist eine mittige, flächige Festigkeitsträgerschicht bzw. einen mittigen flächigen Festigkeitsträger 2 auf, der beidseitig eine äußere bzw. außenseitige Polymerbeschichtung 3 aufweist. Die Polymerbeschichtung 3 bildet jeweils die Außenseite des mehrschichtigen Flächengebildes 1.

Das mehrschichtige Flächengebilde 1 weist zudem eine erste Raumrichtung bzw. Flächenrichtung 4a sowie eine dazu senkrechte zweite Raumrichtung bzw. Flächenrichtung 4b auf. Bzw. das mehrschichtige Flächengebilde 1 weist eine flächenmäßige Erstreckung in die erste und zweite Flächenrichtung 4a;b auf. Zudem weist das Flächengebilde 1 eine Dickenrichtung bzw. Höhenrichtung 4c auf, welche senkrecht zu den beiden Flächenrichtungen 4a;b ist. Der flächige Festigkeitsträger 2 weist folglich ebenfalls eine flächenmäßige Erstreckung in die erste und zweite Flächenrichtung 4a;4b sowie eine höhenmäßige bzw. dickenmäßige Erstreckung in die Dickenrichtung 4c auf.

Die Polymerbeschichtung 3 besteht aus einer Polymermatrix 5, in welche vorzugsweise Füllstoffe, insbesondere flammhemmende Füllstoffe, eingebettet sind. Die Polymermatrix 5 besteht insbesondere aus einem Polymerwerkstoff bzw. Polymer gemäß DIN 7724-1993-04. Vorzugsweise besteht die Polymermatrix 5 aus einem Elastomer gemäß DIN 7724-1993-04. Elastomere sind demnach formfeste, aber elastisch verformbare Polymere, deren Glasübergangspunkt sich unterhalb der Einsatztemperatur befindet. Die Elastomere können sich bei Zug- und Druckbelastung elastisch verformen, finden aber danach wieder in ihre ursprüngliche, unverformte Gestalt zurück. Die Polymermatrix 5 besteht bevorzugt aus vulkanisiertem Kautschuk (Gummi), insbesondere aus vulkanisiertem Silikonkautschuk (Silikongummi) oder vulkanisiertem Naturkautschuk (Naturgummi), oder aus CSM (chlorsulfoniertes Polyethylen) oder EPDM (Ethylen-Propylen-Dien-Kautschuk) oder EVA (Ethylvenylacetat) oder PVC (Polyvinylchlorid) oder aus PU (Polyurethan) oder deren Gemische.

Der Festigkeitsträger 2 weist ein erfindungsgemäßes textiles Flächengebilde bzw. einen textilen, flächigen Träger 6 auf, das bzw. der mindestens zwei Flächenbereiche 34a;34b aufweist, wobei sich die beiden Flächenbereiche 34a;34b zumindest in einer mechanischen Eigenschaft voneinander unterscheiden. Erfindungsgemäß unterscheiden sich die beiden Flächenbereiche 34a;34b hinsichtlich zumindest einer mechanischen Festigkeitseigenschaft in zumindest einer Flächenrichtung 4a;b hinsichtlich der Höchstzugkraft F_{H} gemäß DIN EN ISO 13934-1:2013 und/oder der Höchstzugkraft-Dehnung ε_{H} gemäß DIN EN ISO 13934-1:2013 und/oder des Verhältnisses von Zugkraft gemäß DIN EN ISO 13934-1:2013 zu Dehnung gemäß DIN EN ISO 13934-1:2013.

Die Flächenbereiche 34a;34b weisen eine flächige Erstreckung in die Flächenrichtungen 4a;b des mehrschichtigen Flächengebildes 1 bzw. des textilen Flächengebildes 6 auf. Es handelt sich somit um zweidimensionale Gebilde bzw. die Flächenbereiche 34a;34b weisen eine zweidimensionale Erstreckung auf. Ein einzelner Faden, der sich von den anderen Fäden des textilen Flächengebildes unterscheidet, bildet noch keinen Flächenbereich im Sinne der Erfindung. Dieser ist lediglich ein eindimensionales textiles Gebilde.

Vorzugsweise handelt es sich bei dem textilen Flächengebilde 6 um ein Trägergewebe 6a (Fig. 1-4). Das Trägergewebe 6a weist ein Grundgewebe 7 aus sich in die erste Flächenrichtung 4a erstreckenden Grundkettfäden 8 und die Grundkettfäden 8 kreuzende, sich parallel zur zweiten Flächenrichtung 4b erstreckenden Grundschussfäden 9 auf. Die erste Flächenrichtung 4a entspricht somit einer Kettrichtung 10 und die zweite Flächenrichtung 4b entspricht somit einer Schussrichtung 11 des Trägergewebes 6a. Zudem weist das Trägergewebe 6a eine Gewebeoberseite 12a und eine Gewebeunterseite 12b auf.

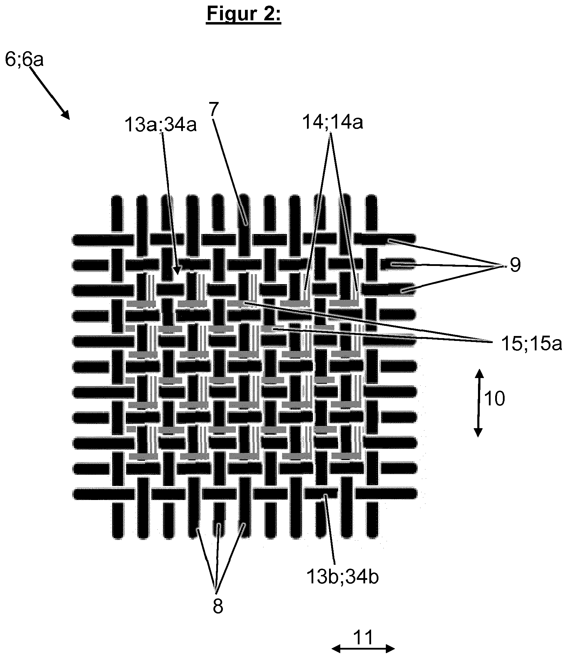

Zudem weist das Trägergewebe 6a erfindungsgemäß zumindest einen, vorzugsweise mehrere, flächige Verstärkungsbereiche 13a auf (Fig. 2-4), die sich flächenmäßig lediglich über einen Teilbereich der gesamten flächenmäßigen Erstreckung des Trägergewebes 6a erstrecken.

Gemäß einer ersten Ausführungsform der Erfindung weist das Trägergewebe 6a im Bereich der Verstärkungsbereiche 13a mehrere zusätzliche Verstärkungskettfäden 14 und/oder Verstärkungsschussfäden 15 auf, die zusätzlich zu den Grundkettfäden 8 bzw. Grundschussfäden 9 in das Grundgewebe 7 eingewoben bzw. mit diesem verwoben sind. Zusätzlich meint, dass die Verstärkungskettfäden 14 bzw. Verstärkungsschussfäden 15 nicht anstelle der Grundkettfäden 8 bzw. der Grundschussfäden 9 vorhanden sind, sondern zusätzlich zu diesen. Die Kettfadendichte bzw. die Schussfadendichte des Trägergewebes 6a ist also in den Verstärkungsbereichen 13a höher als in den nicht verstärkten Bereichen.

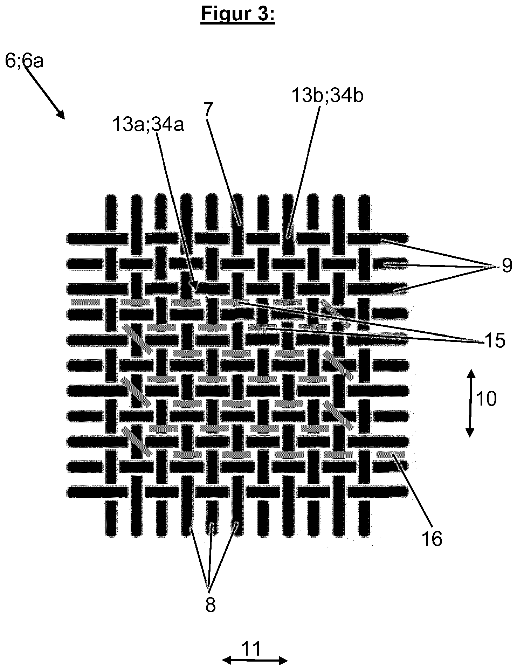

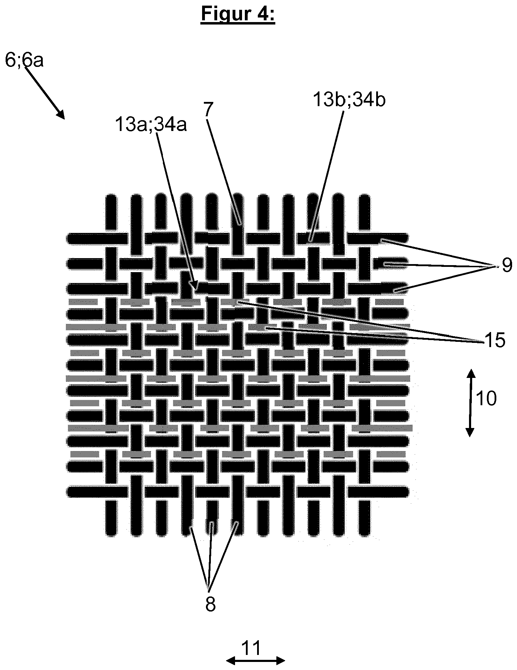

Die Verstärkungsbereiche 13a können sich z.B. über die gesamte Erstreckung des Trägergewebes 6a in Kettrichtung oder Schussrichtung 11 (Fig. 4) oder nur über einen Teilbereich der Erstreckung des Trägergewebes 6a in Kettrichtung 10 und Schussrichtung 11 (Fig. 2 und 3) erstrecken.

Erstreckt sich der Verstärkungsbereich 13a lediglich über einen Teil der Breite des Trägergewebes 6a in Schussrichtung 11, erstrecken sich auch die Verstärkungsschussfäden 15 des Verstärkungsbereichs 13a lediglich über einen Teil der Breite des Trägergewebes 6a in Schussrichtung 11. Dabei können die Verstärkungsschussfäden 15 eines Verstärkungsbereichs 13a aus einzelnen, nicht miteinander verbundenen Schussfadenelementen 15a bestehen (Lancé découpé) (Fig. 2). Bei der Herstellung werden die einzelnen Schussfadenelemente 15 nach dem Verweben mit dem Grundgewebe 7 abgeschnitten. Vorzugsweise werden sie danach mit dem Grundgewebe 7 fest verbunden, insbesondere verknüpft oder verklebt. Dadurch wird verhindert, dass die Schussfadenelemente 15 aus dem Grundgewebe 7 heraus gezogen werden können.

Die Verstärkungskettfäden 14 eines Verstärkungsbereichs 13a bestehen ebenfalls aus einzelnen, nicht miteinander verbundenen Kettfadenelementen 14a (Fig. 2), die ebenfalls nach dem Verweben mit dem Grundgewebe 7 abgeschnitten werden. Auch die Kettfadenelementen 14a werden vorzugsweise danach mit dem Grundgewebe 7 fest verbunden, insbesondere verknüpft oder verklebt um zu verhindern, dass die Kettfadenelemente 14a aus dem Grundgewebe 7 heraus gezogen werden.

Alternativ dazu bestehen die Verstärkungsschussfäden 15 eines sich nicht über die gesamte Breite in Schussrichtung 11 erstreckenden Verstärkungsbereichs 13a aus einem durchgehenden Zusatzschussfaden 16, der über den gesamten Verstärkungsbereich 13a hin- und her geführt wird (Broché) (Fig. 3). Die beiden Enden des Zusatzschussfadens 16 werden vorzugsweise ebenfalls mit dem Grundgewebe 7 fest verbunden, insbesondere verknüpft oder verklebt. Oder der Zusatzschussfaden 16 führt zum nächsten Verstärkungsbereich 13a (nicht dargestellt). Der durchgehende Zusatzschussfaden 16 gewährleistet eine sehr feste Einbindung der Verstärkungsschussfäden 14 in das Grundgewebe 7.

Erstreckt sich der Verstärkungsbereich 13a über die gesamte Erstreckung des Trägergewebes 6a in Kettrichtung 10 (nicht dargestellt) oder in Schussrichtung 11 (Fig. 4), erstrecken sich auch die Verstärkungskettfäden 14 oder die Verstärkungsschussfäden 15 über die gesamte Erstreckung des Trägergewebes 6a in Kettrichtung 10 oder in Schussrichtung 11 (Lancé). Die jeweils anderen Verstärkungsfäden 14;15 des Verstärkungsbereichs 13a erstrecken sich aber nur über einen Teil der Erstreckung des Trägergewebes 6a in Kettrichtung 10 oder Schussrichtung. Der Verstärkungsbereich 13a ist dann streifenförmig.

Bei den Kett- und Schussfäden 8;9;14;15 handelt es sich jeweils um Monofilamentfäden oder Multifilamentfäden. Monofilamentfäden bestehen jeweils aus einem einzigen Monofilament. Multifilamentfäden bestehen aus mehreren Monofilamenten. Die Monofilamente können jeweils einstückig (monolithisch) ausgebildet sein oder eine Kern-/Mantelstruktur aufweisen. Dabei kann ein Multifilamentfaden unterschiedliche Monofilamente, z.B. aus unterschiedlichen Materialien, aufweisen.

Dabei sind die Grundkettfäden 8 und die Grundschussfäden 9 vorzugsweise gummielastisch ausgebildet. Das Trägergewebe 6a ist dadurch zumindest in nicht verstärkten Bereichen 13b in Kettrichtung 10 und in Schussrichtung 11 elastisch ausgebildet. Gummielastisch bedeutet, dass die Grundkettfäden 8 und die Grundschussfäden 9 elastisch reversibel verformbar sind. Das heißt, sie können sich bei Zug- und Druckbelastung elastisch verformen, finden aber danach wieder in ihre ursprüngliche, unverformte Gestalt zurück. Vorzugsweise bestehen die Grundkettfäden 8 und die Grundschussfäden 9 aus einem Polymer, bevorzugt aus Silikonkautschuk oder Naturgummi oder Aramid oder einem anderen Kunststoff, z. B. auf Basis von Polyurethan.

Die Verstärkungskettfäden 14 und/oder Verstärkungsschussfäden 15 dienen erfindungsgemäß zur Erhöhung der Höchstzugkraft F_{H} [N] gemäß DIN EN ISO 13934-1:2013 und/oder zur Verringerung der maximalen Dehnung (=Höchstzugkraft-Dehnung ε_{H} [%] gemäß DIN EN ISO 13934-1:2013) des Trägergewebes 6a in den Verstärkungsbereichen 13a in Kettrichtung 10 und/oder Schussrichtung 11. Das Trägergewebe 6a und das Flächengebilde 1 weisen in den Verstärkungsbereichen 13a somit in Kettrichtung 10 und/oder Schussrichtung 11 eine höhere Höchstzugkraft gemäß DIN EN ISO 13934-1:2013 als in den nicht verstärkten Bereichen 13b auf.

Zudem ist die Höchstzugkraft-Dehnung gemäß DIN EN ISO 13934-1:2013 des Trägergewebes 6a und des Flächengebildes 1 in Kettrichtung 10 und/oder Schussrichtung 11 in den Verstärkungsbereichen 13a jeweils geringer als in den nicht verstärkten Bereichen 13b.

Außerdem ist das Verhältnis von Zugkraft gemäß DIN EN ISO 13934-1:2013 zu Dehnung gemäß DIN EN ISO 13934-1:2013 des Trägergewebes 6a und des Flächengebildes 1 in Kettrichtung 10 und/oder Schussrichtung 11 in den Verstärkungsbereichen 13a jeweils höher als in den nicht verstärkten Bereichen 13b.

Die Verstärkungskettfäden 14 und die Verstärkungsschussfäden 15 weisen vorzugsweise eine höhere Zugfestigkeit bzw. Höchstzugkraft und eine geringere Höchstzugkraft-Dehnung als die Grundkettfäden 8 bzw. die Grundschussfäden 9 auf. Sie können aber auch die gleiche Höchstzugkraft oder eine geringere Höchstzugkraft aufweisen.

Vorteil der erfindungsgemäßen Verstärkungsbereiche 13a ist, dass sie gezielt dort vorgesehen werden können, wo das Trägergewebe 6a bei der jeweiligen Verwendung stärker belastet wird bzw. wo eine höhere Festigkeit bzw. Steifigkeit erforderlich ist, worauf weiter unten noch näher eingegangen wird.

Vorzugsweise ist das Trägergewebe 6a zudem derart ausgebildet, dass es zumindest einen Kanal bzw. eine Gasse bzw. eine Durchführung 17 aufweist, der bzw. die sich senkrecht zur Höhenrichtung 4c bzw. in zumindest eine der beiden Flächenrichtungen 4a;b durch das Trägergewebe 6a durch erstreckt. Vorzugsweise weist das Trägergewebe 6a mehrere Kanäle 17 auf. Die Kanäle 17 weisen zumindest ein, vorzugsweise zwei, Kanalenden auf, an denen sie jeweils an die Umgebung münden.

Die Kanäle 17 werden durch entsprechende Bindung bzw. Verwebung der Kett- und/oder Schussfäden 8;9;14;15 erzeugt. Insbesondere sind die Kett- und Schussfäden 8;9;14;15 derart miteinander verwebt, dass das Trägergewebe 6a sowohl einlagige Gewebebereiche 18 als auch zumindest einen zumindest zweilagigen Gewebebereich 19 mit zumindest zwei Gewebelagen 20a;b aufweist, die nicht miteinander verbunden sind, so dass zwischen den Gewebelagen 20a;b jeweils der Kanal 17 ausgebildet wird. Die Gewebelagen 20a;b sind in Höhenrichtung 4c zueinander benachbart bzw. fluchtend angeordnet. Dabei sind die Kett- und Schussfäden 8;9;14;15 der ersten Gewebelage 20a nicht mit den Kett- und Schussfäden 8;9;14;15 der zweiten Gewebelage 20b verwebt.

Im Einzelnen wird bezüglich der Ausbildung der Kanäle 17 auf die nachveröffentlichte deutsche Patentanmeldung DE 10 2016 109 070 der Anmelderin verwiesen, deren Offenbarungsgehalt hiermit vollumfänglich einbezogen wird.

Gemäß einer weiteren Ausführungsform der Erfindung sind die Verstärkungsbereiche 13 dadurch realisiert, dass sich die Grundkettfäden 8 und/oder die Grundschussfäden 9 der Verstärkungsbereiche 13a von den Grundkettfäden 8 und/oder die Grundschussfäden 9 der nicht verstärkten Bereiche 13b hinsichtlich zumindest einer mechanischen Eigenschaft unterscheiden. Auch dadurch werden unterschiedliche mechanische Eigenschaften erzeugt. In diesem Fall unterscheiden sich die Grundkettfäden 8 und/oder die Grundschussfäden 9 voneinander hinsichtlich zumindest einer mechanischen Festigkeitseigenschaft, nämlich hinsichtlich der Höchstzugkraftdehnung in Anlehnung an DIN EN ISO 2062:2010-04 und/oder der Höchstzugkraft gemäß DIN EN ISO 2062:2010-04. Die Grundkettfäden 8 und/oder die Grundschussfäden 9 der Verstärkungsbereiche 13a und der nicht verstärkten Bereiche 13b können dabei aus den gleichen oder anderen Materialien bestehen und/oder dicker oder dünner ausgebildet sein.

Selbstverständlich können die Verstärkungsbereiche 13a auch sowohl durch Verstärkungsfäden 14 gemäß der ersten Ausführungsform als auch durch andere Grundfäden 8;9 gemäß der zweiten Ausführungsform gebildet sein.

Alternativ dazu können die Verstärkungsbereiche 13 auch durch eine andere Bindungsart als die Grundbindung realisiert werden.

Gemäß einer weiteren Ausführungsform der Erfindung (nicht dargestellt) handelt es sich bei dem textilen Flächengebilde 6 um ein Gestricke oder ein Gewirke oder einen Vliesstoff mit zumindest zwei sich hinsichtlich zumindest einer mechanischen Eigenschaft unterscheidenden Flächenbereichen. Vorzugsweise weist das jeweilige textile Flächengebilde 6 analog zu dem Trägergewebe 6a jeweils ein textiles Grundflächengebilde, bevorzugt ein Grundgewirke bzw. Grundgestricke oder einen Grundvliesstoff, mit einer Grundbindung aus einem oder mehreren Grundfäden auf und ist, wie das Trägergewebe 6a, in Verstärkungsbereichen verstärkt durch zusätzliche Fäden und/oder andere Fäden und/oder andere Fadendichten.

Alternativ oder zusätzlich dazu werden die unterschiedlichen Flächenbereiche zumindest teilweise durch unterschiedliche Grundfäden und/oder andere Bindungsarten gebildet.

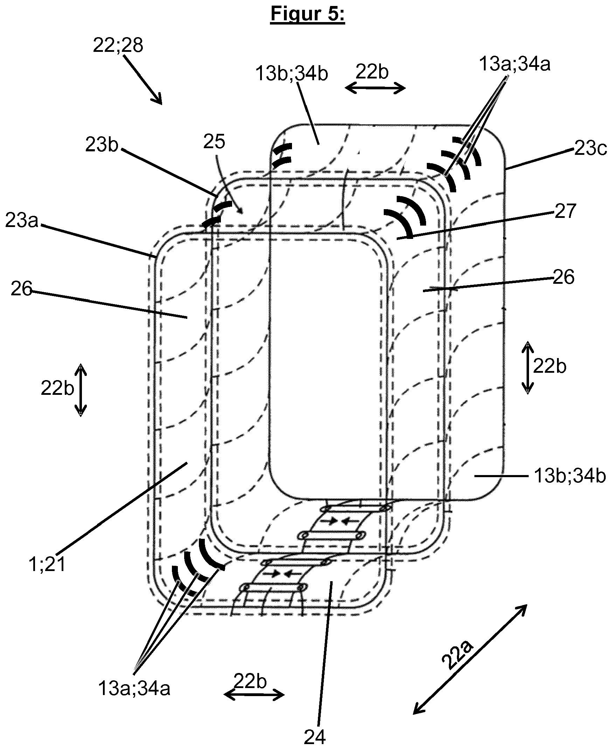

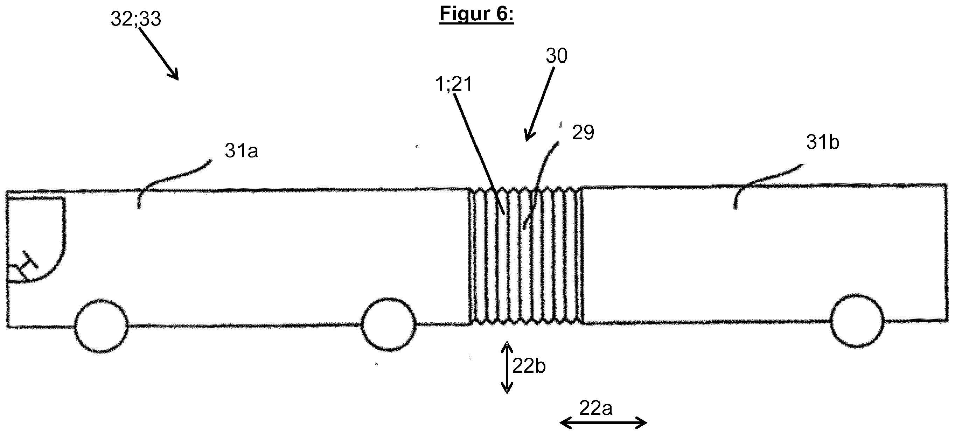

Wie bereits erläutert, wird das erfindungsgemäße Flächengebilde 1 vorzugsweise als Balgwandung 21 eines Übergangsbalg 22 verwendet (Fig. 5 und 6). Der Übergangsbalg 22 weist eine Balglängsrichtung 22a sowie eine dazu senkrechte Balgumfangsrichtung 22b auf. Zudem weist der Übergangsbalg 22 mehrere, in Balglängsrichtung 22a voneinander beabstandete, umlaufende, Balgspannrahmen 23a-c sowie die zwischen die Balgspannrahmen 23a-c eingespannte Balgwandung 21 auf. Die Balgwandung 21 umgibt einen tunnelartigen bzw. kanalartigen Balginnenraum.

Zudem sind Balgspannrahmen 23a-c sind vorzugsweise jeweils rechteckig ausgebildet. Infolgedessen weist der Übergangsbalg 22 vorzugsweise einen rechteckigen Querschnitt auf bzw. ist kastenförmig ausgebildet. Zudem weist die Balgwandung 21 einen, bevorzugt horizontalen, Balgboden 24, ein, bevorzugt horizontales, Balgdach 25, und zwei, bevorzugt vertikale, Balgseitenwände 26 auf. Der Balgboden 24 und das Balgdach 25 gehen jeweils über Eckbereiche 27 in die Balgseitenwände 26 über.

Der Übergangsbalg 22 kann aber auch einen anderen, z.B. einen kreisrunden, Querschnitt aufweisen (nicht dargestellt).

Bei dem Übergangsbalg 22 handelt es sich vorzugsweise um einen Wellenbalg 27 (Fig. 5) oder einen Faltenbalg 28 (Fig. 6). Im Fall des Wellenbalgs 27 ist die Balgwandung 21 in an sich bekannter Weise derart eingespannt, dass die Balgwandung 21 im unbelasteten bzw. ungedehnten Zustand des Wellenbalgs 27 zwischen den Balgrahmen 23a-c 23a-c Wellen gebildet werden. Der Faltenbalg 28 weist in an sich bekannter Weise abwechselnd innere und äußere Faltenkanten auf, wobei die Balgwandung 21 an den Faltenkanten jeweils in einen Balgrahmen 23a-c eingespannt ist.

Wie bereits in der DE 10 2016 109 070 beschrieben, dienen die Kanäle 17 zur Aufnahme der Balgrahmen 23a-c. Das heißt, die Balgrahmen 23a-c sind in den Kanälen 17 angeordnet bzw. in diese eingeschoben. Dadurch wird die Balgwandung 21 auf die Balgrahmen 23a-c aufgespannt bzw. zwischen diese eingespannt. Die Kanäle 17 erstrecken sich dazu beispielsweise in Balgumfangsrichtung 22b.

Die Balgwandung 21 weist in den Eckbereichen 27 zudem mehrere erfindungsgemäße Verstärkungsbereiche 13a auf. Die streifenförmigen Verstärkungsbereiche 13a weisen eine Längserstreckung in Balgumfangsrichtung 22b auf. Sie dienen zur Verstärkung der Eckbereiche 27. Die Eckbereiche 17 sind am weitesten von den Bewegungsachsen entfernt, so dass hier die größten Kräfte und Bewegungen auftreten. Infolgedessen sind die Verstärkungsbereiche 13a in den Eckbereichen 17 vorteilhaft. Ein weiterer Grund ist die Formgebung der Eckbereiche 17, damit diese beim Zusammenfahren der Ecken sauber geformt werden.

Des Weiteren weisen vorzugsweise auch die beiden Gewebelagen 20a:b an ihren beiden Endbereichen, also dort, wo sie wieder zusammengeführt werden, jeweils einen Verstärkungsbereich 13a (Fig. 1) auf. Dies dient dazu, die zweilagigen Bereiche seitlich zu verstärken, sodass diese entsprechende mechanische Lasten aufnehmen können.

Der erfindungsgemäße Übergangsbalg 22 wird vorzugsweise für einen Übergang 30 verwendet, an dem zwei Fahrzeugteile 31a;b eines Fahrzeugs 32 relativ zueinander beweglich, insbesondere, gelenkig miteinander verbunden sind, um den Übergang 30 vor Wetter und Zugluft zu schützen. Bei dem Fahrzeug 32 handelt es sich vorzugsweise um einen Gelenkbus 33 oder ein Schienenfahrzeug, insbesondere einen Reisezug, eine Straßenbahn, eine Metro oder U-Bahn. Die beiden Fahrzeugteile 31a;b sind insbesondere um eine vertikale Drehachse relativ zueinander verdrehbar und/oder in Fahrtrichtung relativ zueinander verschieblich und/oder quer zur Fahrtrichtung verschieblich und/oder um eine Längsachse des Fahrzeugs (Wanken) drehbar miteinander verbunden.

Bei dem Übergangsbalg 22 kann es sich zudem auch um einen Übergangsbalg 22 zum Schutz des Übergangs einer Fluggastbrücke oder -treppe zum Flugzeug und/oder zum Terminal handeln.

Oder es kann sich um einen Übergangsbalg 22 zum Schutz des Übergangs zwischen zwei Gebäudeteilen, beispielsweise zum Schutz des Übergangs zwischen einer Brücke und einem Gebäudeabschnitt, handeln.

Gleichermaßen kann der Übergangsbalg 22 aus mehreren flächigen Balgelementen (nicht dargestellt) ausgebildet sein, welche jeweils zwei gerade Spannrahmenelemente aufweisen, zwischen denen ein erfindungsgemäßes Flächengebilde 1 eingespannt ist.

Auch kann das erfindungsgemäße Flächengebilde 1 als Wandung von Übergangselementen verwendet werden, welche zum Schutz eines Übergangs zwischen zwei relativ zueinander beweglichen Maschinenteilen oder anderen Bauteilen verwendet werden, um den jeweiligen Übergang vor äußeren Einflüssen, insbesondere Verschmutzung, zu schützen und gegenüber der Umgebung abzudichten. Das Übergangselement kann dabei unterschiedliche Formen aufweisen, z.B. eine flächige Form oder eine U-Form oder auch die Form eines Übergangsbalges. Zudem ist das Übergangselement analog wie beim Übergang 30 der beiden Fahrzeugteile 31a;b jeweils fest mit einem der beiden Bauteile verbunden.

Des Weiteren kann das Übergangselement, insbesondere der Übergangsbalg 22, bzw. dessen Wandung auch ungewellt und ohne Falten ausgebildet sein. In diesem Fall ist die Wandung, insbesondere die Balgwandung 21 entsprechend elastisch ausgebildet. Insbesondere ist die Wandung gemäß der deutschen Patentanmeldung DE 10 2011 107 370 A1 ausgebildet.

Vorteil des erfindungsgemäßen Flächengebildes 1 ist, dass keine einzelnen Materialabschnitte in Form von Falten oder Wellen hergestellt und zugeschnitten werden müssen und über Balgrahmen verbunden werden müssen. Die Balgwandung 21 eines Übergangbalgs 33 kann z.B. aus einem einzigen Materialabschnitt bestehen, da die Balgspannrahmen 23a-c in die Kanäle 12 eingezogen werden bzw. sind und die Verstärkungsbereiche 13a in das Flächengebilde 1 bzw. die Balgwandung 21 integriert sind. Bei bekannten Wellenbalgen ist dagegen in der Regel pro Welle ein Materialstreifen vorhanden und bei bekannten Faltenbalgen erstreckt sich jeweils ein Materialstreifen von Faltenkante zu Faltenkante.

Es müssen zudem keine zusätzlichen, verstärkenden Stoffstreifen oder dergleichen auf das das Flächengebilde 1 aufgebracht werden. Dadurch hat das Flächengebilde 1 bzw. die Balgwandung 21 eine glatte und dem Fahrzeug folgende Außenkontur, was die Aerodynamik begünstigt und auch die Reinigung erleichtert.

Auch weist die Balgwandung 21 eine hohe Dichtigkeit auf, da sie aus einem durchgehenden Materialabschnitt ohne Nähte besteht.

Zudem ist das Trägergewebe 6a einfach und sehr variabel herstellbar. Denn die Verstärkungsbereiche 13a werden direkt beim Verweben durch entsprechendes Anheben bzw. Absenken der einzelnen Kettfäden 8;14 und Steuern der Schussfäden 9;15 hergestellt.

Dabei liegt es im Rahmen der Erfindung, dass der Festigkeitsträger 2 mehrschichtig ausgebildet ist und aus mehreren textilen Flächengebilden besteht, die jeweils miteinander mittels einer Haftschicht aus einem Polymer verbunden sind. Zumindest eines der textilen Flächengebilde ist das erfindungsgemäße Trägergewebe 6a. Vorzugsweise besteht der Festigkeitsträger 2 aber aus einem erfindungsgemäßen Trägergewebe 6a. Des Weiteren kann zwischen der Polymerbeschichtung 3 und dem Festigkeitsträger 2 auch eine Haftschicht aus einem Polymer vorhanden sein.

Zudem können die Verstärkungsbereiche 13a selbstverständlich an beliebigen anderen Stellen der Balgwandung 21 vorhanden sein. Insbesondere können die Verstärkungsbereiche 13a auch zur Befestigung weiterer Anbauteile an den Balg vorgesehen sein um den entsprechenden Bereich zu verstärken. Oder zur Verstärkung besonders beanspruchter Balgbereiche oder Teile.

## Patentansprüche

1. Mehrschichtiges Flächengebilde (1) für ein Übergangselement (22) zum Schutz eines Übergangs (30) von zwei relativ zueinander beweglich miteinander verbundenen Fahrzeugteilen (31a;31b) oder Bauteilen aufweisend einen Festigkeitsträger (2), der zumindest einseitig, vorzugsweise beidseitig, eine Polymerbeschichtung (3) aufweist, wobei der Festigkeitsträger (2) zumindest ein textiles Flächengebilde (6), bevorzugt ein Trägergewebe (6a), aufweist, wobei das textile Flächengebilde (6), insbesondere das Trägergewebe (6a), mindestens zwei Flächenbereiche (13a;13b;34a;34b) aufweist, die sich in zumindest einer mechanischen Eigenschaft voneinander unterscheiden,
**dadurch gekennzeichnet, dass**
sich die Flächenbereiche (13a; 13b;34a;34b) hinsichtlich zumindest einer mechanischen Festigkeitseigenschaft in zumindest einer Flächenrichtung (4a;b) des mehrschichtigen Flächengebildes (1) hinsichtlich der Höchstzugkraft F_{H} gemäß DIN EN ISO 13934-1:2013 und/oder der Höchstzugkraft-Dehnung ε_{H} gemäß DIN EN ISO 13934-1:2013 und/oder des Verhältnisses von Zugkraft gemäß DIN EN ISO 13934-1:2013 zu Dehnung gemäß DIN EN ISO 13934-1:2013 voneinander unterscheiden.

2. Flächengebilde (1) nach Anspruch 1,
**dadurch gekennzeichnet, dass**
es sich vorzugsweise bei den Flächenbereichen (13a;13b;34a;34b) um zumindest einen Verstärkungsbereich (13a) und zumindest einen nicht verstärkten Bereich (13b) handelt, wobei der Verstärkungsbereich (13a) in zumindest einer Flächenrichtung (4a;b) des mehrschichtigen Flächengebildes (1) eine höhere Höchstzugkraft F_{H} gemäß DIN EN ISO 13934-1:2013 und/oder eine höhere Höchstzugkraft-Dehnung ε_{H} gemäß DIN EN ISO 13934-1:2013 und/oder ein größeres Verhältnis von Zugkraft gemäß DIN EN ISO 13934-1:2013 zu Dehnung gemäß DIN EN ISO 13934-1 :2013, aufweist als der nicht verstärkte Bereich (13b),
wobei vorzugsweise das textile Flächengebilde (6) ein textiles Grundflächengebilde (7) mit einer Grundbindung aus einem oder mehreren Grundfäden (8;9) aufweist, wobei das Grundflächengebilde (7) den oder die nicht verstärkten Bereiche (13b) bildet und wobei das textile Flächengebilde (6) in dem zumindest einen Verstärkungsbereich (13a) verstärkt ist durch zusätzlich zu den Grundfäden (8;9) vorhandene Zusatzfäden (14;15) und/oder andere Grundfäden und/oder eine sich von der Grundbindung unterscheidende Bindung.

3. Flächengebilde (1) nach Anspruch 1 oder 2,
**dadurch gekennzeichnet, dass**
das Trägergewebe (6a) ein Grundgewebe (7) aus Grundkettfäden (8) und Grundschussfäden (9) sowie zumindest einen flächigen Verstärkungsbereich (13a) mit mehreren zusätzlichen Verstärkungskettfäden (14) und/oder mehreren zusätzlichen Verstärkungsschussfäden (15) aufweist, die mit dem Grundgewebe (7) verwoben sind.

4. Flächengebilde (1) nach einem der Ansprüche 2 bis 3,
**dadurch gekennzeichnet, dass**
sich der Verstärkungsbereich (13a) flächenmäßig lediglich über einen Teilbereich der gesamten flächenmäßigen Erstreckung des textilen Flächengebildes (6), bevorzugt des Trägergewebes (6a), erstreckt.

5. Flächengebilde (1) nach Anspruch 3 oder 4,
**dadurch gekennzeichnet, dass**
sich der Verstärkungsbereich (13a) flächenmäßig über die gesamte Erstreckung des Trägergewebes (6a) in Kettrichtung (10) und nur über einen Teilbereich der Erstreckung des Trägergewebes (6a) in Schussrichtung (11) erstreckt oder dass sich der Verstärkungsbereich (13a) flächenmäßig über die gesamte Erstreckung des Trägergewebes (6a) in Schussrichtung (11) und nur über einen Teilbereich der Erstreckung des Trägergewebes (6a) in Kettrichtung (10) erstreckt.

6. Flächengebilde (1) nach einem der Ansprüche 3 bis 5,
**dadurch gekennzeichnet, dass**
sich der Verstärkungsbereich (13a) flächenmäßig nur über einen Teilbereich der Erstreckung des Trägergewebes (6a) in Kettrichtung (10) und nur über einen Teilbereich der Erstreckung des Trägergewebes (6a) in Schussrichtung (11) erstreckt.

7. Flächengebilde (1) nach einem der Ansprüche 3 bis 6,
**dadurch gekennzeichnet, dass**
die Verstärkungsschussfäden (15) des sich nicht über die gesamte Erstreckung des Trägergewebes (6a) in Schussrichtung (11) erstreckenden Verstärkungsbereichs (13a) aus einzelnen, nicht miteinander verbundenen Schussfadenelementen (15a) bestehen, welche vorzugsweise mit dem Grundgewebe (7) fest verbunden, insbesondere verknüpft oder verwoben oder verklebt sind.

8. Flächengebilde (1) nach einem der Ansprüche 3 bis 6,
**dadurch gekennzeichnet, dass**
die Verstärkungsschussfäden (15) des sich nicht über die gesamte Erstreckung des Trägergewebes (6a) in Schussrichtung (11) erstreckenden Verstärkungsbereichs (13a) aus einem durchgehenden Zusatzschussfaden (16) bestehen, der über den gesamten Verstärkungsbereich (13a) hin- und her geführt wird, wobei vorzugsweise die beiden Enden des Zusatzschussfadens (16) mit dem Grundgewebe (7) fest verbunden, insbesondere verknüpft oder verklebt sind.

9. Flächengebilde (1) nach einem der Ansprüche 3 bis 8,
**dadurch gekennzeichnet, dass**
die Verstärkungskettfäden (14) des sich nicht über die gesamte Erstreckung des Trägergewebes (6a) in Kettrichtung (10) erstreckenden Verstärkungsbereichs (13a) aus einzelnen, nicht miteinander verbundenen Kettfadenelementen (14a) bestehen, welche vorzugsweise mit dem Grundgewebe (7) fest verbunden, insbesondere verknüpft oder verklebt sind.

10. Flächengebilde (1) nach einem der vorhergehenden Ansprüche,
**dadurch gekennzeichnet, dass**
der Festigkeitsträger (2) aus dem textilen Flächengebilde (6), vorzugsweise aus dem Trägergewebe (6a), besteht.

11. Verwendung eines Flächengebildes (1) nach einem der vorhergehenden Ansprüche als Balgwandung (21) eines Übergangsbalgs (22), insbesondere eines Übergangsbalgs (22) in Form eines Wellen- oder Faltenbalgs (28;29).

12. Übergangselement (22), insbesondere flächenförmiges oder im Querschnitt kasten- oder U-förmig umlaufendes Übergangselement (22), zum Schutz eines Übergangs (30) von zwei relativ zueinander beweglich miteinander verbundenen Fahrzeugteilen (31a;31b) oder Bauteilen, insbesondere von zwei gelenkig miteinander verbundenen Fahrzeugteilen (31a;31b) oder Bauteilen, vor äußeren Einflüssen, wobei das Übergangselement (22) zumindest zwei zueinander beabstandete Spannelemente (23a-c) aufweist,
**dadurch gekennzeichnet, dass**
zwischen die mind. zwei Spannelemente (23a-c) ein Flächengebilde (1) gemäß einem der Ansprüche 1 bis 10 eingespannt ist,
wobei das Übergangselement (22) vorzugsweise ein Übergangsbalg (22) ist, wobei der Übergangsbalg (22) zumindest zwei voneinander beabstandete Balgspannrahmen (23a-c) und eine Balgwandung (21) aufweist, die aus dem mehrschichtigen Flächengebilde (1) besteht, wobei vorzugsweise die Balgwandung (21) bei Normalstand der Fahrzeugteile zueinander keine Wellen oder Falten aufweist oder der Übergangsbalg (22) als Wellen- oder Faltenbalg (28;29) ausgebildet ist.

13. Fahrzeug (32), insbesondere Schienenfahrzeug oder Gelenkbus (33), aufweisend zumindest zwei an einem Übergang (30) relativ zueinander beweglich miteinander verbundene, bevorzugt miteinander gelenkig verbundene, Fahrzeugteile (31a;31b),
**dadurch gekennzeichnet, dass**
das Fahrzeug pro Übergang (30) zumindest ein den Übergang (30) schützendes Übergangselement (22) nach Anspruch 12 aufweist.

14. Fluggastbrücke oder -treppe,
**dadurch gekennzeichnet, dass**
die Fluggastbrücke oder -treppe zumindest ein Übergangselement (22) nach Anspruch 12 zum Schutz des Übergangs der Fluggastbrücke oder -treppe zum Flugzeug und/oder zum Terminal aufweist.

15. Gebäudeverbindung aufweisend zwei an einem Übergang miteinander verbundene Gebäudeteile,
**dadurch gekennzeichnet, dass**
die Gebäudeverbindung zumindest ein Übergangselement (22) nach Anspruch 12 zum Schutz des Übergangs der beiden Gebäudeteile aufweist.

## Claims

1. Multi-layered sheet material (1) for a crossway element (22) for protection of a passageway (30) of two vehicle parts (31a; 31 b) or components, which are connected together movably relative to each other, the multi-layered sheet material (1) comprising a reinforcing support (2) that comprises a polymer coating (3) at least on one side, preferably on both sides, wherein the reinforcing support (2) comprises at least one textile fabric (6), preferably a supporting woven fabric (6a),
wherein the textile fabric (6), in particular the supporting woven fabric (6a), comprises at least two surface regions (13a; 13b; 34a; 34b), which differ from each other in at least one mechanical property,
**characterized in that**
the surface regions (13a; 13b; 34a; 34b) differ from each other with respect to at least one mechanical strength property in at least one surface direction (4a;b) of the multi-layered sheet material (1) with respect to the maximum tensile force F_{H} according to DIN EN ISO 13934-1:2013 and/or the elongation at maximum tensile force ε_{H} according to DIN EN ISO 13934-1:2013 and/or the ratio of tensile force according to DIN EN ISO 13934-1:2013 to elongation according to DIN EN ISO 13934-1:2013.

2. Sheet material (1) according to claim 1,
**characterized in that**
preferably the surface regions (13a; 13b;34a;34b) pertain to at least one reinforcing region (13a) and at least one non-reinforced region (13b), wherein in at least one surface direction (4a;b) of the multi-layered sheet material(1) the reinforcing region (13a) has a higher maximum tensile force F_{H} according to DIN EN ISO 13934-1:2013 and/or a higher elongation at maximum tensile force ε_{H} according to DIN EN ISO 13934-1:2013 and/or a greater ratio of tensile force according to DIN EN ISO 13934-1:2013 to elongation according to DIN EN ISO 13934-1 :2013 than the non-reinforced region (13b),
wherein preferably the textile fabric (6) comprises a textile base fabric (7) having a base binding made of one or more base threads (8;9), wherein the base fabric (7) forms the non-reinforced region(s) (13b) and wherein the textile fabric (6) is reinforced in the at least one reinforcing region (13a) by additional threads (14;15) provided in addition to the base threads (8;9) and/or other base threads and/or a binding different from the base binding.

3. Multi-layered sheet material (1), in particular according to claim 1 or 2, comprising a reinforcing support (2) that comprises a polymer coating (3) at least on one side, preferably on both sides, wherein the reinforcing support (2) comprises at least one supporting woven fabric (6a),
**characterized in that**
the supporting woven fabric (6a) comprises a base woven fabric (7) made of base warp threads (8) and base weft threads (9) as well as at least one planar reinforcing region (13a) having a plurality of additional reinforcing warp threads (14) and/or a plurality of additional reinforcing weft threads (15) that are woven with the base woven fabric (7).

4. Sheet material (1) according to one of claims 2 to 3,
**characterized in that**
the reinforcing region (13a) extends two-dimensionally only over a partial region of the entire two-dimensional extension of the textile fabric (6), preferably of the supporting woven fabric (6a).

5. Sheet material (1) according to claim 3 or 4,
**characterized in that**
the reinforcing region (13a) extends two-dimensionally over the entire extension of the supporting woven fabric (6a) in the warp direction (10) and only over a partial region of the extension of the supporting woven fabric (6a) in the weft direction (11), or that the reinforcing region (13a) extends two-dimensionally over the entire extension of the supporting woven fabric (6a) in the weft direction (11) and only over a partial region of the extension of the supporting woven fabric (6a) in the warp direction (10).

6. Sheet material (1) according to one of claims 3 to 5,
**characterized in that**
the reinforcing region (13a) extends two-dimensionally only over a partial region of the extension of the supporting woven fabric (6a) in the warp direction (10) and only over a partial region of the extension of the supporting woven fabric (6a) in the weft direction (11).

7. Sheet material (1) according to one of claims 3 to 6,
**characterized in that**
the reinforcing weft threads (15) of the reinforcing region (13a) not extending over the entire extension of the supporting woven fabric (6a) in the weft direction (11) are comprised of individual weft thread elements (15a) not connected to each other, which are preferably fixedly connected to the base fabric (7), in particular intertwined to or woven with or adhered to.

8. Sheet material (1) according to one of claims 3 to 6,
**characterized in that**
the reinforcing weft threads (15) of the reinforcing region (13a) not extending over the entire extension of the supporting woven fabric (6a) in the weft direction (11) are comprised of a continuous additional weft thread (16) that is guided back and forth over the entire reinforcing region (13a), wherein the two ends of the additional weft thread (16) are preferably fixedly connected, in particular intertwined or adhered, to the base woven fabric (7).

9. Sheet material (1) according to one of claims 3 to 8,
**characterized in that**
the reinforcing warp threads (14) of the reinforcing region (13a) not extending over the entire extension of the supporting woven fabric (6a) in the warp direction (10) are comprised of individual warp thread elements (14a) not connected to each other, which are preferably fixedly connected, in particular intertwined or adhered, to the base woven fabric (7).

10. Sheet material (1) according to one of the preceding claims,
**characterized in that**
the reinforcing support (2) consists of the textile fabric (6), preferably of the supporting woven fabric (6a).

11. Use of a sheet material (1) according to one of the preceding claims as bellows wall (21) of a crossway bellows (22), in particular of a crossway bellows (22) in the form of a corrugated or pleated bellows (28;29).

12. A crossway element (22), in particular a crossway element (22) being two-dimensional or being formed circumferential in a box-like or U-shaped manner in the cross section, for protection of a passageway (30) of two vehicle parts (31a; 31b) or components, which are connected together movably relative to each other, in particular comprising two vehicle parts (31a; 31b) or components being interconnected in an articulated manner, against external influences, wherein the crossway element (22) comprises at least two tensioning elements (23a-c) being spaced apart from each other,
**characterized in that**
at least one sheet material (1) according to one of claims 1 to 10 is stretched between the at least two tensioning elements (23a-c), wherein preferably the crossway element (22) is a crossway bellows (22), wherein the crossway bellows (22) comprises at least two bellows tensioning frames (23a-c) spaced from each other and a bellows wall (21) that consists of the multi-layered sheet material (1),
wherein preferably in the normal state of the vehicle parts with respect to each other, the bellows wall (21) does not have corrugations or pleats, or the crossway bellows (22) is configured as a corrugated or pleated bellows (28;29).

13. Vehicle (32), in particular rail vehicle or articulated bus (33), comprising at least two vehicle parts (31a;31b) connected together movably relative to each other, preferably connected to each other by articulation, at a passageway (30),
**characterized in that**
for each passageway (30), the vehicle comprises at least one crossway element (22) according to claim 12 protecting the passageway (30).

14. Flight passenger bridge or staircase,
**characterized in that**
the flight passenger bridge or staircase comprises at least one crossway element (22) according to claim 12 for protecting the passageway of the flight passenger bridge or staircase to the aircraft and/or to the terminal.

15. A building connection comprising two building parts connected together at a passageway,
**characterized in that**
the building connection comprises at least one crossway element (22) according to claim 12 for protecting the passageway of the two building parts.

## Revendications

1. Structure plane multicouche (1) pour un élément de passage (22) pour la protection d'un passage (30) de deux parties de véhicule (31a ; 31b), ou éléments de construction, reliées l'une à l'autre de manière mobile relativement l'une par rapport à l'autre, comportant un support de renfort (2), lequel comporte un revêtement polymère au moins sur une face, de préférence sur les deux faces, le support de renfort (2) comportant au moins une structure plane textile (6), de préférence un tissu de support (6a), la structure plane textile (6), en particulier le tissu de support (6a), comportant au moins deux zones surfaciques (13a ; 13b ; 34a ; 34b), lesquelles se différencient l'une de l'autre par au moins une propriété mécanique,
**caractérisée en ce que**
les zones surfaciques (13a ; 13b ; 34a ; 34b) se différencient l'une de l'autre en ce qui concerne l'au moins une propriété de résistance mécanique dans au moins une direction surfacique (4a ; b) de la structure plane multicouche (1) en rapport avec la force de traction maximale F_{H} selon DIN EN ISO 13934-1 :2013 et/ou l'allongement sous force de traction maximale ε_{H} selon DIN EN ISO 13934-1 :2013 et/ou le rapport entre la force de traction selon DIN EN ISO 13934-1 :2013 et l'allongement selon DIN EN ISO 13934-1 :2013.

2. Structure plane multicouche (1) selon la revendication 1,
**caractérisée en ce que**
de préférence, les zones surfaciques (13a ; 13b ; 34a ; 34b) se composent d'une zone de renforcement (13a) et d'au moins une zone non renforcée (13b), la zone de renforcement (13a) comportant dans au moins une direction surfacique (4a ; b) de la structure plane multicouche (1) une force de traction maximale F_{H} selon DIN EN ISO 13934-1 :2013 et/ou un allongement sous force de traction maximale ε_{H} selon DIN EN ISO 13934-1 :2013 et/ou un rapport entre la force de traction selon DIN EN ISO 13934-1 :2013 et l'allongement selon DIN EN ISO 13934-1 :2013 plus grand que la zone non renforcée (13b),
de préférence, la structure plane textile (6) comportant une structure plane textile de base (7) dotée d'une armure de base composée d'un ou plusieurs fils de base (8 ; 9), la structure plane textile de base (7) formant la ou les zones non renforcées (13b), et la structure plane textile (6) étant renforcée dans la au moins une zone de renforcement (13a) par des fils additionnels (14 ; 15) prévus additionnellement aux fils de base (8 ; 9) et/ou d'autres fils de base et/ou d'une armure se différenciant de l'armure de base.

3. Structure plane multicouche (1) selon la revendication 1 ou 2,
**caractérisée en ce que**
le tissu de support (6a) comporte un tissu de base (7) composé de fils de chaîne de base (8) et de fils de trame de base (9) ainsi qu'au moins une zone de renforcement (13a) plane doté de plusieurs fils de chaîne de renforcement (14) additionnels et/ou de plusieurs fils de trame de renforcement (15) additionnels, lesquels sont tissés avec le tissu de base (7).

4. Structure plane multicouche (1) selon l'une des revendications 2 à 3,
**caractérisée en ce que**
la zone de renforcement (13a) s'étend à plat uniquement sur une zone partielle de l'étendue totale à plat de la structure plane textile (6), de préférence du tissu de support (6a).

5. Structure plane multicouche (1) selon la revendication 3 ou 4,
**caractérisée en ce que**
la zone de renforcement (13a) s'étend à plat sur l'étendue totale du tissu de support (6a) dans la direction de la chaîne (10) et seulement sur une zone partielle de l'étendue du tissu de support (6a) dans la direction de la trame (11), ou **en ce que** la zone de renforcement (13a) s'étend à plat sur l'étendue totale du tissu de support (6a) dans la direction de la trame (11) et seulement sur une zone partielle de l'étendue du tissu de support (6a) dans la direction de la chaîne (10).

6. Structure plane multicouche (1) selon l'une des revendications 3 à 5,
**caractérisée en ce que**
la zone de renforcement (13a) s'étend à plat seulement sur une zone partielle de l'étendue du tissu de support (6a) dans la direction de la chaîne (10) et seulement sur une zone partielle de l'étendue du tissu de support (6a) dans la direction de la trame (11).

7. Structure plane multicouche (1) selon l'une des revendications 3 à 6,
**caractérisée en ce que**
les fils de trame de renforcement (15) de la zone de renforcement (13a) s'étendant dans la direction de la trame (11) non sur l'étendue totale du tissu de support (6a) se composent d'éléments de fils de trame (15a) unitaires, non reliés les uns avec les autres, lesquels sont de préférence reliés fixement au tissu de base (7), en particulier liés ou tissés ou collés.

8. Structure plane multicouche (1) selon l'une des revendications 3 à 6,
**caractérisée en ce que**
les fils de trame de renforcement (15) de la zone de renforcement (13a) s'étendant dans la direction de la trame (11) non sur l'étendue totale du tissu de support (6a) se composent d'un fil de trame additionnel (16) traversant, lequel est guidé en aller-retour sur toute la zone de renforcement (13a), de préférence les deux extrémités du fil de trame additionnel (16) étant reliées fixement au tissu de base (7), en particulier liées ou tissées ou collées.

9. Structure plane multicouche (1) selon l'une des revendications 3 à 8,
**caractérisée en ce que**
les fils de chaîne de renforcement (14) de la zone de renforcement (13a) s'étendant dans la direction de la chaîne (10) non sur l'étendue totale du tissu de support (6a) se composent d'éléments de fils de chaîne (14a) unitaires, non reliés les uns avec les autres, lesquels sont de préférence reliés fixement au tissu de base (7), en particulier liés ou tissés ou collés.

10. Structure plane multicouche (1) selon l'une des revendications précédentes,
**caractérisée en ce que**
le support de renfort (2) se compose de la structure plane textile (6), de préférence du tissu de support (6a).

11. Utilisation d'une structure plane multicouche (1) selon l'une des revendications précédentes en tant que paroi de soufflet (21) d'un soufflet de passage (22), en particulier d'un soufflet de passage (22) sous forme d'un soufflet (28 ; 29) ondulé ou plissé.

12. Elément de passage (22), en particulier élément de passage (22) de forme plate ou de périphérie en section transversale en forme de caisson ou de U, pour la protection d'un passage (30) de deux parties de véhicule (31a ; 31b), ou éléments de construction, reliées l'une à l'autre de manière mobile relativement l'une par rapport à l'autre, en particulier de deux parties de véhicule (31a ; 31b), ou éléments de construction, reliées l'une à l'autre de manière articulée, par des emprises extérieures, l'élément de passage (22) comportant au moins deux éléments tenseurs (23a-c) distants l'un de l'autre,
**caractérisé en ce qu'**
entre les au moins deux éléments tenseurs (23a-c) est attelée une structure plane (1) selon l'une des revendications 1 à 10, l'élément de passage (22) étant de préférence un soufflet de passage (22), le soufflet de passage (22) se composant d'au moins deux cadres tenseurs de soufflet (23a-c) distants l'un de l'autre et d'une paroi de soufflet (21), laquelle se compose d'une structure plane multicouche (1), de préférence la paroi de soufflet (21) ne comportant aucune ondulation ou soufflet à l'état normal des parties de véhicule l'une par rapport à l'autre ou le soufflet de passage (22) étant conformé en tant que soufflet (28 ; 29) ondulé ou plissé.

13. Véhicule (32), en particulier véhicule ferroviaire ou autobus articulé (33), comportant au moins deux parties de véhicule (31a ; 31b) reliées l'une à l'autre de manière mobile relativement l'une par rapport à l'autre par un passage (30), de préférence reliées l'une à l'autre de manière articulée,
**caractérisé en ce que**
le véhicule comporte, par passage (30), au moins un élément de passage (22) selon la revendication 12 protégeant le passage (30).

14. Passerelle ou escalier d'embarquement aéroportuaire,
**caractérisée en ce que**
la passerelle ou escalier d'embarquement aéroportuaire comporte au moins un élément de passage selon la revendication 12 pour la protection du passage de la passerelle ou escalier d'embarquement aéroportuaire vers l'avion et/ou vers le terminal.

15. Jonction de bâtiment comportant deux parties de bâtiment reliées l'une à l'autre par un passage,
**caractérisée en ce que**
la jonction de bâtiment comporte au moins un élément de passage (22) selon la revendication 12 pour la protection du passage des deux parties de bâtiment.
